# FASCICULE DE BREVET EUROPEEN

(11) **EP 0 874 541 B1**
(45) Date de publication et mention de la délivrance du brevet: **17.10.2001**
(21) Numéro de dépôt: 96944095.7
(22) Date de dépôt: 27.12.1996
(51) Int. Cl.: A01B 13/08, A01B 15/02

(54) **LAME, EN PARTICULIER POUR CHASSIS PORTE-LAME(S)**
ZINKENBLATT, INSBESONDERE FÜR ZINKENTRÄGER
BLADE, PARTICULARLY FOR BLADE-BEARING CHASSIS

(30) Priorité: 29.12.1995 FR 9515734
(43) Date de publication de la demande: 04.11.1998
(73) Titulaire: Evin, Michel, 44850 Ligne (FR)
(72) Inventeur: Evin, Michel, 44850 Ligne (FR)
(74) Mandataire: Dawidowicz, Armand
(86) Numéro de dépôt international: FR9602095
(87) Numéro de publication internationale: WO9724024

(56) Documents cités:
- EP-A- 0 101 245
- EP-A- 0 153 765
- FR-A- 2 633 799
- FR-A- 2 667 756
- FR-A- 2 669 181
- FR-A- 2 687 275
- GB-A- 2 160 751
- US-A- 4 817 727
- US-A- 5 163 780

## Description

La présente invention concerne une lame telle que décrite dans le préambule de la revendication 1. Une telle lame est connue par le document FR-A-2667756.

Le tassement des sols est une préoccupation de plus en plus vive dans les régions de culture. Dans les sols sensibles au tassement, la répétition des labours et l'utilisation de matériels lourds font apparaître des zones compactes, véritables barrières pour le développement des racines et les mouvements de l'eau. Il devient donc nécessaire aujourd'hui d'ameublir les sols en provoquant une décompaction et un fendillement des zones compactes de manière à rétablir ainsi le système naturel de pores et de fissures du sol sans perturber de façon notable sa surface. Les dispositifs de décompaction doivent donc aujourd'hui briser efficacement les semelles en ameublissant le sol de façon homogène sur la largeur et la profondeur travaillées. La conception des lames est déterminante pour répondre à ce problème. On a constaté, depuis les années 70, une grande évolution des lames proposées sur le marché. Les lames de décompaction des années 70 se caractérisaient toutes par une partie travaillante, encore appelée étançon, essentiellement verticale et un soc disposé au niveau du bord inférieur de l'étançon dans ledit plan vertical formé par l'étançon. Il en résultait un certain nombre d'inconvénients. En effet, une puissance importante était absorbée, des compressions latérales fortes étaient engendrées et on constatait un lissage en fond de travail. Enfin, le profil de la surface travaillée obtenu était hétérogène et la structure du sol était bouleversée.

Pour pallier ces différents inconvénients, on a vu se développer dans les années 80 des lames courbes qui présentaient par rapport à un plan vertical une inclinaison, au niveau de l'étançon, voisine de 45 degrés, voire supérieure à 45 degrés. Ces lames étaient munies de pièces d'usure généralement réalisées en plusieurs parties et situées dans la partie avant ou arrière de la lame. Ainsi il pouvait être prévu à l'arrière de chaque lame un volet dont l'inclinaison était réglable, ce volet permettant d'accentuer plus ou moins le soulèvement et la fissuration du sol en fonction de sa nature et de son humidité. Ces lames présentaient toutefois différents inconvénients. Elles étaient tout d'abord complexes à fabriquer, relativement fragiles et donc de maintenance difficile. En outre, les aspects de surface obtenus au moyen de ces lames étaient difficile à maîtriser. En effet, l'action de soulèvement exercé par ces lames était une action de soulèvement oblique liée à la forte inclinaison de l'étançon. De cette forte inclinaison il en résulte un effet dit "cathédrale".

Il est donc apparu nécessaire de développer une lame exempte des inconvénients précités, à savoir une lame permettant un ameublissement du sol par une action de soulèvement sensiblement verticale n'engendrant pas d'effet de lissage du sol et ne bouleversant pas les couches de terre.

Le but de la présente invention est donc de proposer une lame dont l'action permet d'ameublir le sol, par une action de soulèvement vertical, sans toutefois bouleverser la structure du sol et en particulier l'arrangement des couches de terre et sans engendrer de remontée notable de cailloux qui correspondrait à une action de triage des éléments constitutifs du sol.

Un autre but de la présente invention est de proposer une lame qui, par sa conception, provoque une décompaction régulière et homogène sur toute la largeur travaillée.

Un autre but de la présente invention est de proposer une lame qui absorbe de manière quasi-parfaite les efforts latéraux engendrés lors du soulèvement du sol, en particulier lorsqu'il passe sur la pièce d'usure.

A cet effet, l'invention concerne une lame, en particulier pour un châssis porte-lames devant être attelé à un véhicule tracteur, cette lame comprenant au moins un corps de lame destiné à être fixé audit châssis, ledit corps de lame présentant, dans sa partie travaillante, au moins une portion inclinée latéralement par rapport à un plan vertical parallèle à l'axe d'avancement de la lame est dans lequel se trouve la partie du corps de la lame destinée à être fixée au châssis, pour former par rapport audit plan vertical un angle α, cette portion inclinée étant prolongée latéralement à, ou au voisinage de, son bord inférieur d'un talon à incidence positive en direction du sol, ce talon étant muni d'au moins une, pièce d'usure constituée d'au moins une pointe, caractérisée en ce que cette pointe est décalée latéralement par rapport à l'arête frontale dite bord d'attaque de la portion inclinée du corps de lame pour exercer une action de soulèvement d'une bande de terre dont la résultante est essentiellement verticale et en ce que l'angle α est compris dans la plage angulaire [5 - 20 degrés], de préférence voisin de 9 degrés.

Du fait de la conception de cette lame, on constate une action de soulèvement vertical de la lame au niveau de la pointe de la pièce d'usure et éventuellement du talon et une absorption des efforts latéraux grâce à la portion inclinée du corps de lame qui permet une augmentation de volume du sol sans nuire à l'action de soulèvement.

Selon une première forme de réalisation préférée de l'invention, le talon et la pièce d'usure constituent une pièce monobloc.

Selon une deuxième forme de réalisation préférée de l'invention, la pièce d'usure est rapportée sur ledit talon et est solidarisée au corps de lame de manière appropriée.

L'invention sera bien comprise à la lecture de la description suivante d'un exemple de réalisation, en référence aux dessins annexés dans lesquels :
la figure 1 représente une vue arrière en perspective d'un châssis équipé d'une lame conforme à l'invention, ce châssis devant être attelé à un véhicule tracteur ;
la figure 2 représente une vue en perspective d'une lame en position assemblée des éléments la constituant ;
la figure 3 représente une vue en perspective de la lame représentée à la figure 2 en position éclatée desdits éléments la constituant ;
la figure 4 représente une vue en perspective d'un autre mode de réalisation de la lame représentée aux figures 1 et 2 et
la figure 5 représente une vue en perspective d'une lame suivant un autre mode de réalisation de l'invention.

La lame 1, objet de l'invention, est destinée à être installée sur un châssis 2 porte-lames 1 devant lui-même être attelé à un véhicule tracteur. Généralement, un même châssis est équipé de plusieurs lames. Chaque lame 1 comprend au moins un corps 3 de lame fixé audit châssis 2. Généralement, ce corps 3 de lame est fixé audit châssis de manière à pouvoir pivoter autour d'un axe sensiblement horizontal et perpendiculaire à l'axe d'avancement du véhicule tracteur de manière à permettre un escamotage de la lame en cas de rencontre d'un obstacle et ce de manière connue.

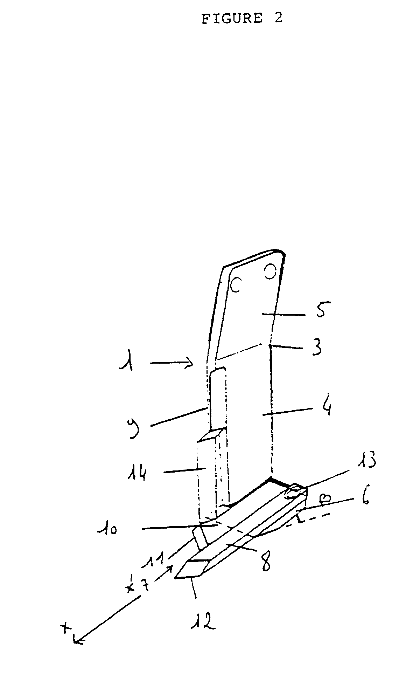

La partie du corps 3 de lame devant être fixée au châssis, représentée en 5 à la figure 2, peut affecter un grand nombre de formes. Dans l'exemple représenté, cette partie est une partie sensiblement verticale, c'est-à-dire contenue dans un plan vertical parallèle à l'axe XX' d'avancement du véhicule tracteur. Par contre, la partie travaillante du corps 3 de lame, c'est-à-dire la partie de la lame destinée à pénétrer dans le sol en position travail du châssis porte-lame(s) comporte au moins une portion 4 inclinée latéralement par rapport à un plan vertical parallèle à l'axe XX' d'avancement de la lame pour former par rapport audit plan vertical un angle α compris dans la plage angulaire [5 - 20 degrés], de préférence voisin de 9 degrés. Cette portion inclinée permet d'absorber les efforts latéraux liés à l'action de soulèvement générée par ladite lame. Une trop forte inclinaison de cette partie provoquerait à l'inverse un désarrangement de la couche de terre soulevée.

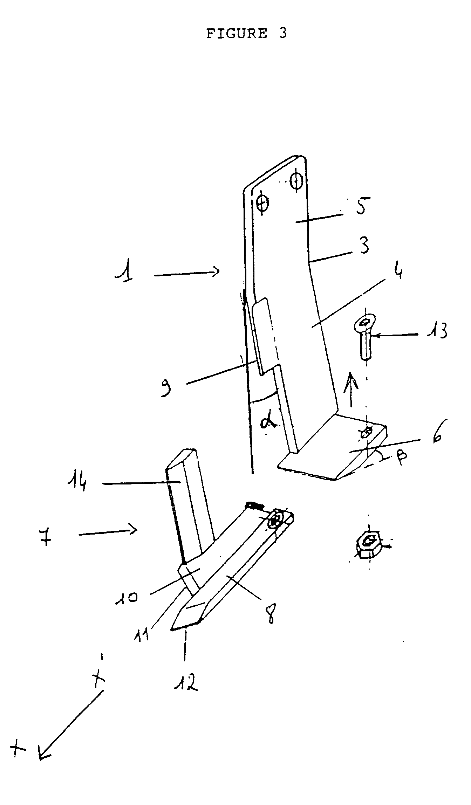

Cette portion 4 inclinée est prolongée latéralement à, ou au voisinage de, son bord inférieur d'un talon 6 à incidence positive en direction du sol. Ce talon se présente généralement sous la forme d'une surface relativement peu épaisse s'étendant dans un plan sensiblement horizontal. Cette surface est par ailleurs inclinée suivant un angle β compris entre 2 à 20 degrés, de préférence voisin de 12 degrés, par rapport au plan horizontal comme le montre la figure 3.

Ce talon 6 est muni d'une pièce d'usure 7 constituée d'au moins une pointe 8. Cette pointe 8 est décalée latéralement par rapport à l'arête frontale 9, dite bord d'attaque, de la portion 4 inclinée du corps 3 de lame, pour exercer une action de soulèvement d'une bande de terre dont la résultante est essentiellement verticale. Le positionnement de cette pointe 8 distingue cette lame de toutes les lames antérieures. En effet, le décalage latéral entre pointe et arête frontale 9 de la portion inclinée du corps permet d'obtenir une action de soulèvement vertical et non oblique et une absorption des efforts latéraux par ladite portion 4 inclinée. Ceci garantit un désarrangement minimal du sol.

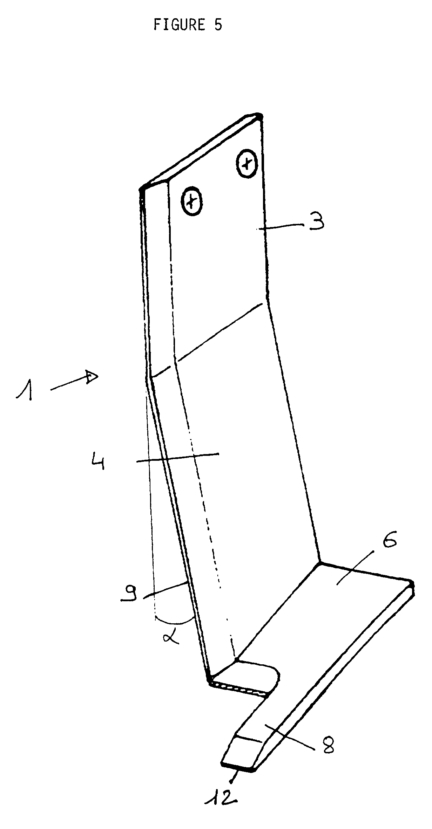

Le talon 6 et la pièce d'usure 7 peuvent affecter un grand nombre de formes. Dans l'exemple représenté à la figure 5, le talon 6 et la pièce d'usure 7 constituent une pièce monobloc. Dans ce cas, la pointe 8 est disposée dans le prolongement latéral du talon 6 et dans le même plan que ce dernier. Dans ce cas, la pointe 8 délimite un tranchant frontal 12 disposé en amont de l'arête frontale dudit talon par rapport au sens d'avancement XX' de la lame. Cette caractéristique est une caractéristique que l'on retrouvera sur l'ensemble des lames décrites ci-après. Il est en effet important que l'action de soulèvement au moyen de la pointe s'exerce avant pénétration de l'arête frontale du talon dans le sol et avant pénétration ultérieure du bord d'attaque ou de l'arête frontale 9 de la portion 4 inclinée du corps 3 de lame dans le sol.

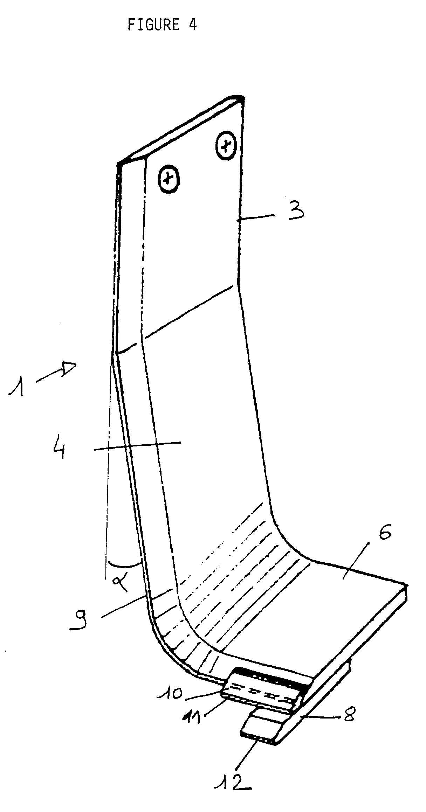

Dans un autre mode de réalisation conforme aux figures 2 et 4, la pièce d'usure 7 est rapportée sur ledit talon 6 et est solidarisée au corps 3 de lame 1 de manière appropriée. Dans les exemples des figures 2 et 3, la pièce d'usure 7 est solidarisée au corps 3 de lame au moyen d'un boulon de fixation 13 unique apte à coupler mécaniquement la pièce d'usure 7 avec le talon 6 du corps 3 de la lame. Ceci offre l'avantage d'un montage rapide et par suite d'un démontage rapide de la pièce d'usure 7 du corps 3 de lame. La maintenance est donc facilitée. Dans l'exemple représenté à la figure 4, la pièce d'usure 7 est constituée, outre la pointe 8 d'un plat de liaison 10, pointe 8 et plat de liaison 10 venant en appui sur ledit talon 6 du corps 3 de lame et délimitant respectivement des tranchants frontaux 12 et 11 disposés en amont de l'arête frontale dudit talon 6 par rapport au sens d'avancement XX' de la lame . On note que, dans ce cas, la pointe 8 de la pièce d'usure 7 est disposée sur la face du dessous dudit talon 6, cette pointe 8 délimitant un tranchant frontal 12 disposé en amont de l'arête frontale dudit talon par rapport au sens d'avancement dudit véhicule tracteur. Le plat de liaison est quant à lui disposé sur la face du dessus dudit talon.

Une autre solution qui consisterait à disposer la pointe 8 de la pièce d'usure 7 sur la face du dessus dudit talon 6, cette pointe, délimitant un tranchant frontal 12 disposé en amont de l'arête frontale dudit talon 6 par rapport au sens d'avancement XX' de la lame peut également être envisagée. Un exemple de réalisation en est représenté aux figures 2 et 3. On note également, à travers les figures 3 et 4, que la zone de liaison entre portion 4 inclinée de la lame et talon 6 peut être constituée par une portion courbe, comme le montre la figure 4, ou par une portion formant un angle obtus, comme le montre la figure 3.

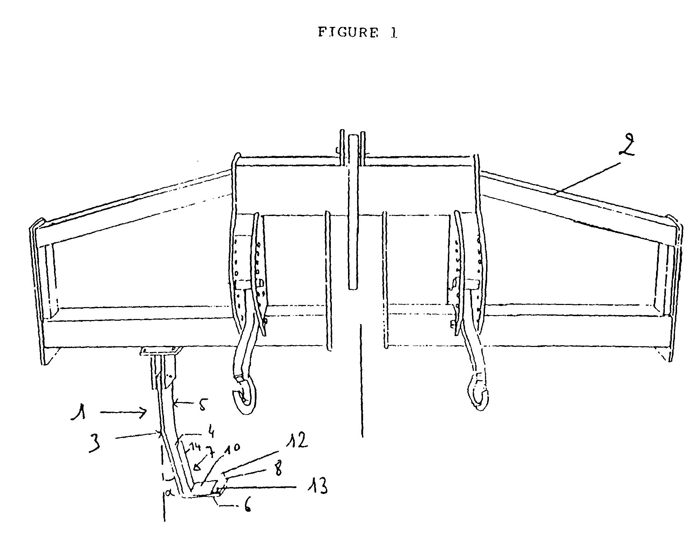

Dans les exemples des figures 1 à 3, la pièce d'usure 7 comporte en outre un bord d'attaque 14 venant en applique sur la portion 4 inclinée du corps 3 de la lame et faisant légèrement saillie de l'arête frontale 9 dudit corps de lame. Dans l'exemple représenté, la pièce d'usure 7, constituée du bord d'attaque 14, du plat de liaison 10 et de la pointe 8, est formée d'une seule pièce pour à nouveau faciliter le montage de ladite pièce d'usure sur le corps de lame. On note encore que les tranchants frontaux du bord d'attaque 14, du plat de liaison 10, et de la pointe 8 sont décalés axialement par rapport à l'axe XX' d'avancement de la lame , le tranchant frontal 12 de la pointe 8 étant situé en avant de celui 11 du plat de liaison 10, lui-même situé en avant de celui du bord d'attaque 14. Ce positionnement des tranchants frontaux favorise la pénétration de la pièce d'usure dans le sol sans toutefois désorganiser le sol.

Grâce à l'action de soulèvement essentiellement vertical exercée par les pièces travaillantes constituées par la pièce d'usure 7 et la partie travaillante du corps 3 de lame, on obtient un ameublissement homogène du sol. Cette action de soulèvement peut être légèrement modifiée en fonction de l'inclinaison β formée par le talon 6 avec un plan sensiblement horizontal. Grâce à l'action de soulèvement de la pointe 8 combinée à l'action d'absorption des efforts latéraux liés à l'augmentation de volume du sol lors de son soulèvement par la partie 4 inclinée de la lame, la structure du sol reste parfaitement préservée en surface et en profondeur. On obtient ainsi des rendements élevés avec un minimum d'énergie.

Il est à noter que cette lame peut être associée à des coutres, des outils rotatifs, des rouleaux, etc. situés en amont ou en aval de la lame et portés soit par le châssis porte-lame, soit par le châssis d'un outil supplémentaire. Toutefois, indépendamment du nombre d'outils placés sur un dispositif d'ameublissement des sols, les lames continuent à remplir leur fonction essentielle d'ameublissement. Cet ameublissement peut être notamment nécessaire pour remplacer un labour de printemps de manière à préparer le sol au semis. Il peut également être utilisé en d'autres saisons lorsqu'il est nécessaire d'aérer des zones asphyxiées et tassées par, par exemple, le passage des machines ou le piétinement des animaux. Il peut être également nécessaire d'ameublir le sol après drainage pour assurer une bonne circulation de l'eau vers les drains.

## Revendications

1. Lame (1) en particulier pour un châssis (2) porte-lames (1) devant être attelé à un véhicule tracteur, cette lame comprenant au moins un corps (3) de lame destiné à être fixé audit châssis (2),
ledit corps (3) de lame présentant dans sa partie travaillante, au moins une portion (4) inclinée latéralement par rapport à un plan vertical parallèle à l'axe (XX') d'avancement de la lame et dans lequel se trouve la partie (5) du corps (3) de la lame destinée à être fixée au châssis (2), pour former par rapport audit plan vertical un angle α, cette portion inclinée étant prolongée latéralement à, ou au voisinage de, son bord inférieur d'un talon (6) à incidence positive en direction du sol, ce talon étant muni d'au moins une pièce d'usure (7) constituée d'au moins une pointe (8), **caractérisée en ce que** cette pointe (8) est décalée latéralement par rapport à l'arête frontale (9), dite bord d'attaque, de la portion (4) inclinée du corps (3) de lame pour exercer une action de soulèvement d'une bande de terre dont la résultante est essentiellement verticale et **en ce que** l'angle α est compris dans la plage angulaire [5 - 20 degrés], de préférence voisin de 9 degrés.

2. Lame selon la revendication 1,
**caractérisée en ce que** le talon (6) et la pièce d'usure (7) constituent une pièce monobloc.

3. Lame selon la revendication 1,
**caractérisée en ce que** la pièce d'usure (7) est rapportée sur ledit talon (6) et est solidarisée au corps (3) de lame (1) de manière appropriée.

4. Lame selon la revendication 3,
**caractérisée en ce que** la pièce d'usure (7) est solidarisée au corps (3) de lame au moyen d'un boulon de fixation (13) unique apte à coupler mécaniquement la pièce d'usure (7) avec le talon (6) du corps (3) de la lame.

5. Lame selon l'une des revendications 1 à 4,
**caractérisée en ce que** la pointe (8) de la pièce d'usure (7) est disposée sur la face du dessous ou du dessus dudit talon (6), cette pointe (8) délimitant un tranchant frontal (12) disposé en amont de l'arête frontale dudit talon (6) par rapport au sens d'avancement (XX') de la lame.

6. Lame selon l'une des revendications 1 à 5,
**caractérisée en ce que** la pièce d'usure (7) est constituée, outre la pointe (8) d'un plat de liaison (10), pointe (8) et plat de liaison (10) venant en appui sur ledit talon (6) du corps (3) de lame et délimitant des tranchants frontaux (12, 11) disposés en amont de l'arête frontale dudit talon (6) par rapport au sens d'avancement (XX') de la lame.

7. Lame selon l'une des revendications 1 à 6,
**caractérisée en ce que** la pièce d'usure (7) comporte en outre un bord d'attaque (14) venant en applique sur la portion (4) inclinée du corps (3) de la lame et faisant légèrement saillie de l'arête frontale dudit corps de lame.

8. Lame selon les revendication 6 et 7,
**caractérisée en ce que** la pièce d'usure (7), constituée du bord d'attaque (14), du plat de liaison (10) et de la pointe (8), est formée d'une seule pièce.

9. Lame selon l'une des revendications 6 et 7,
**caractérisée en ce que** les tranchants frontaux du bord d'attaque (14), du plat de liaison (10), et de la pointe (8) sont décalés axialement par rapport à l'axe (XX') d'avancement de la lame, le tranchant frontal (12) de la pointe (8) étant situé en avant de celui (11) du plat de liaison (10), lui-même situé en avant de celui du bord d'attaque (14).

## Patentansprüche

1. Zinkenblatt (1), insbesondere für einen Zinkenblätter (1) tragenden Zinkenträger (2), der an ein Zugfahrzeug anzuhängen ist, wobei dieses Zinkenblatt wenigstens einen Zinkenblattkörper (3) umfaßt, der zur Befestigung an dem besagten Zinkenträger (2) bestimmt ist, wobei der besagte Zinkenblattkörper (3) in seinem Arbeitsteil wenigstens einen Abschnitt (4) aufweist, der, bezogen auf eine vertikale Ebene, die parallel zur Achse (XX') der Vorwärtsbewegung des Zinkenblatts verläuft und in der sich der Teil (5) des Zinkenblattkörpers (3) befindet, der zur Befestigung am Zinkenträger (2) bestimmt ist, seitlich geneigt ist, um, bezogen auf die besagte vertikale Ebene, einen Winkel α zu bilden, wobei dieser geneigte Abschnitt seitlich an oder in der Nähe seines unteren Rands durch eine Sohle (6) mit positivem Anstellwinkel in Richtung des Bodens verlängert wird, wobei diese Sohle mit wenigstens einem Verschleißteil (7) versehen ist, das aus wenigstens einer Spitze (8) besteht, **dadurch gekennzeichnet, daß** diese Spitze (8), bezogen auf die als Angriffskante bezeichnete Stirnkante (9) des geneigten Abschnitts (4) des Zinkenblattkörpers (3), seitlich versetzt ist, um eine Hebewirkung zur Anhebung eines Erdstreifens auszuüben, deren Resultierende im wesentlichen vertikal ist, und daß der Winkel α in dem Winkelbereich [5 - 20 Grad] enthalten ist, vorzugsweise nahe 9 Grad liegt.

2. Zinkenblatt nach Anspruch 1, **dadurch gekennzeichnet, daß** die Sohle (6) und das Verschleißteil (7) ein einteiliges Element bilden.

3. Zinkenblätt nach Anspruch 1, **dadurch gekennzeichnet, daß** das Verschleißteil (7) an der besagten Sohle (6) angefügt ist und in geeigneter Weise fest mit dem Körper (3) des Zinkenblatts (1) verbunden ist.

4. Zinkenblatt nach Anspruch 3, **dadurch gekennzeichnet, daß** das Verschleißteil (7) mit dem Körper (3) des Zinkenblatts mittels eines einzigen Befestigungsbolzens (13) fest verbunden ist, der das Verschleißteil (7) kraftschlüssig mit der Sohle (6) des Körpers (3) des Zinkenblatts verbinden kann.

5. Zinkenblatt nach einem der Ansprüche 1 bis 4,
**dadurch gekennzeichnet, daß** die Spitze (8) des Verschleißteils (7) auf der Fläche der Unterseite oder der Oberseite der besagten Sohle (6) angeordnet ist, wobei diese Spitze (8) eine stirnseitige Schneidkante (12) begrenzt, die, bezogen auf die Richtung der Vorwärtsbewegung (XX') des Zinkenblatts, vor der Stirnkante der besagten Sohle (6) angeordnet ist.

6. Zinkenblatt nach einem der Ansprüche 1 bis 5, **dadurch gekennzeichnet, daß** das Verschleißteil (7), abgesehen von der Spitze (8), aus einem Verbindungsflachstück (10) besteht, wobei Spitze (8) und Verbindungsflachstück (10) auf der besagten Sohle (6) des Zinkenblattkörpers (3) zur Anlage kommen und stirnseitige Schneidkanten (12, 11) begrenzen, die, bezogen auf die Richtung der Vorwärtsbewegung (XX') des Zinkenblatts, vor der Stirnkante der besagten Sohle (6) angeordnet sind.

7. Zinkenblatt nach einem der Ansprüche 1 bis 6,
**dadurch gekennzeichnet, daß** das Verschleißteil (7) außerdem eine Angriffskante (14) umfaßt, die auf dem geneigten Abschnitt (4) des Körpers (3) des Zinkenblatts aufsitzt und leicht über die Stirnkante des besagten Zinkenblattkörpers vorsteht.

8. Zinkenblatt nach den Ansprüchen 6 und 7,
**dadurch gekennzeichnet, daß** das aus der Angriffskante (14), dem Verbindungsflachstück (10) und der Spitze (8) bestehende Verschleißteil (7) durch ein einziges Teil gebildet wird.

9. Zinkenblatt nach einem der Ansprüche 6 und 7,
**dadurch gekennzeichnet, daß** die stirnseitigen Schneidkanten der Angriffskante (14), des Verbindungsflachstücks (10) und der Spitze (8), bezogen auf die Achse (XX') der Vorwärtsbewegung des Zinkenblatts, axial versetzt sind, wobei sich die stirnseitige Schneidkante (12) der Spitze (8) vor derjenigen (11) des Verbindungsflachstücks (10) befindet, die sich ihrerseits vor derjenigen der Angriffskante (14) befindet.

## Claims

1. A blade (1), in particular for a blade (1)-bearing chassis (2) intended to be coupled to a tractor vehicle, said blade comprising at least one blade body (3) intended to be fixed to the said chassis (2),
the said blade body (3) having, in its working part, at least one portion (4) inclined laterally with respect to a vertical plane parallel to the axis (XX') of travel of the blade and in which the part(s) of the blade body (3) intended to be fixed to the chassis (2) is (are) located, in order to form an angle α with respect to the said vertical plane, said inclined portion being extended laterally at, or at the vicinity of, its lower edge by a projection (6) with a positive angle of incidence in the direction of the ground, said projection being provided with at least one wear piece (7) consisting of at least one point (8), **characterised in that** said point (8) is laterally offset with respect to the front edge (9), termed the leading edge, of the inclined portion (4) of the blade body (3) in order to exert a lifting action on a strip of ground, the resultant of which is essentially vertical, and **in that** the angle α is in the angular range [5 - 20 degrees], preferably close to 9 degrees.

2. A blade according to Claim 1,
**characterised in that** the projection (6) and the wear piece (7) comprise a single part.

3. A blade according to Claim 1,
**characterised in that** the wear piece (7) is mounted on the said projection (6) and is integrated with the body (3) of the blade (1) in a suitable manner.

4. A blade according to Claim 3,
**characterised in that** the wear piece (7) is integrated with the blade body (3) by means of a single fixing bolt (13) suitable for mechanically coupling the wear piece (7) to the projection (6) of the blade body (3).

5. A blade according to one of Claims 1 to 4,
**characterised in that** the point (8) of the wear piece (7) is arranged on the bottom face or the top face of the said projection (6), said point (8) delimiting a front cutting edge (12) arranged on the up side of the front edge of the said projection (6) with respect to the direction of travel (XX') of the blade.

6. A blade according to one of Claims 1 to 5,
**characterised in that** the wear piece (7) consists of a linking plate (10) in addition to the point (8), point (8) and linking plate (10) coming to bear on the said projection (6) of the blade body (3) and delimiting front cutting edges (12, 11) arranged on the up side of the front edge of the said projection (6) with respect to the direction of travel (XX') of the blade.

7. A blade according to one of Claims 1 to 6,
**characterised in that** the wear piece (7) also has a leading edge (14) coming to bear on the inclined portion (4) of the blade body (3) and projecting slightly from the front edge of the said blade body.

8. A blade according to Claims 6 and 7,
**characterised in that** the wear piece (7), consisting of the leading edge (14), the linking plate (10) and the point (8), is made in one piece.

9. A blade according to one of Claims 6 and 7,
**characterised in that** the front cutting edges of the leading edge (14), the linking plate (10) and the point (8) are axially offset with respect to the axis (XX') of travel of the blade, the front cutting edge (12) of the point (8) being located in front of that (11) of the linking plate (10), which itself is located in front of that of the leading edge (14).
